# EUROPÄISCHE PATENTSCHRIFT

(11) **EP 2 788 604 B1**
(45) Veröffentlichungstag und Bekanntmachung des Hinweises auf die Patenterteilung: **01.03.2017**
(21) Anmeldenummer: 12815617.1
(22) Anmeldetag: 26.11.2012
(51) Int. Cl.: F02D 13/06, F16F 15/131, F16F 15/14

(54) **ANTRIEBSSTRANG**
DRIVE TRAIN
CHAÎNE CINÉMATIQUE

(30) Priorität: 05.12.2011 DE 102011087730; 02.03.2012 DE 102012203330
(43) Veröffentlichungstag der Anmeldung: 15.10.2014
(73) Patentinhaber: Schaeffler Technologies AG & Co. KG, 91074 Herzogenaurach (DE)
(72) Erfinder: MENDE, Hartmut, 77815 Bühl (DE); HEPPERLE, Walter, 77542 Offenburg (DE); SEEBACHER, Roland, 77743 Neuried-Ichenheim (DE)
(86) Internationale Anmeldenummer: PCT/DE2012/001129
(87) Internationale Veröffentlichungsnummer: WO 2013/083106

(56) Entgegenhaltungen:
- DE-A1- 10 018 955
- DE-A1-102011 012 606
- US-A1- 2007 037 659

## Beschreibung

Die Erfindung betrifft einen Antriebsstrang mit einer Brennkraftmaschine mit einer vorgegebenen Anzahl von Zylindern mit einem ersten Betriebszustand, in dem alle Zylinder betrieben werden, und einem zweiten Betriebszustand, in dem ein Teil der Zylinder abgeschaltet ist, und mit einem Drehschwingungsdämpfungssystem mit zumindest einem Drehschwingungsdämpfer und zumindest einem Fliehkraftpendel.

Gattungsgemäße Antriebsstränge werden bevorzugt in Kraftfahrzeugen eingesetzt und enthalten eine Brennkraftmaschine, ein Getriebe und einen Abtrieb zum Antrieb des Kraftfahrzeugs. Zur Isolation und Dämpfung von Drehschwingungen der Brennkraftmaschine sind Drehschwingungssysteme bekannt, die beispielsweise einen oder mehrere Drehschwingungsdämpfer enthalten. Diese sind bevorzugt auf der Kurbelwelle oder einer Getriebeeingangswelle des Getriebes aufgenommen und können geteilte Schwungräder, Torsionsschwingungsdämpfer in Kupplungsscheiben einer zwischen der Kurbelwelle und der Getriebeeingangswelle vorgesehenen Reibungskupplung und dergleichen sein und sind beispielsweise aus den Dokumenten DE 37 03 123 A1 und DE 34 42 705 A1 bekannt. Weiterhin sind zur Drehschwingungstilgung Fliehkraftpendel beispielsweise aus der DE 10 2010 005 599 A1 bekannt geworden, welche mittels gegenüber einem mit der Kurbelwelle oder Getriebeeingangswelle aufgenommenen Pendelflansch begrenzt verschwenkbarer Pendelmassen einen drehzahladaptiven Drehschwingungstilger bilden. Weiterhin sind Kombinationen von Fliehkraftpendeln mit den bezeichneten Drehschwingungsdämpfern beispielsweise aus der WO 2011/110153 A1, DE 10 2010 018 941 A1 und DE 10 2010 022 252 A1 bekannt. Dabei wird das Drehschwingungsdämpfungssystem auf das Drehschwingungsverhalten der Brennkraftmaschine, beispielsweise auf dessen Schwingungsordnung abgestimmt. Beispielsweise weisen Viertaktmotoren mit vier Zylindern Schwingungsordnungen gleich zwei und Viertaktmotoren mit zwei Zylindern Schwingungsordnungen gleich eins auf.

Aus der DE 100 36 720 A1 ist beispielsweise eine Brennkraftmaschine bekannt, bei der eine vorgegebene Anzahl von Zylindern aus Energiespargründen in Fahrsituationen mit geringer Lastanforderung abschaltbar und bei entsprechender Momentanforderung wieder zuschaltbar sind. Hieraus ergeben sich zwei Betriebszustände der Brennkraftmaschine in einem Antriebsstrang mit unterschiedlichen Schwingungsordnungen und daher unterschiedlichem Drehschwingungsverhalten.

Das Dokument DE 10 2011 012606 A1 wird als nächstliegender Stand der Technik angesehen und offenbart einen Antriebsstrang mit einer Brennkraftmaschine und mit einem Drehschwingungsdämpfungssystem mit zumindest einem Drehschwingungsdämpfer und zumindest einem Fliehkraftpendel.

Aufgabe der Erfindung ist daher, einen Antriebsstrang vorzuschlagen, der über beide Betriebszustände der Brennkraftmaschine mittels eines angepassten Drehschwingungssystems ein verbessertes Drehschwingungsverhalten erzielt.

Die Aufgabe wird durch einen Antriebsstrang mit einer Brennkraftmaschine mit einer vorgegebenen Anzahl von Zylindern mit einem ersten Betriebszustand, in dem alle Zylinder betrieben werden, und einem zweiten Betriebszustand, in dem ein Teil der Zylinder abgeschaltet ist, und mit einem Drehschwingungsdämpfungssystem mit zumindest einem Drehschwingungsdämpfer und zumindest einem Fliehkraftpendel gelöst, wobei ein Fliehkraftpendel und wahlweise ein Drehschwingungsdämpfer auf ein Drehschwingungsverhalten eines Betriebszustands und ein Drehschwingungsdämpfer und wahlweise ein zweites Fliehkraftpendel auf das Drehschwingungsverhalten des anderen Betriebszustandes abgestimmt sind. Durch Verwendung mehrerer Komponenten des Drehschwingungsdämpfungssystems in Form zumindest eines Fliehkraftpendels und zumindest eines Drehschwingungsdämpfers kann das Drehschwingungsverhalten der beiden Betriebszustände der Brennkraftmaschine jeweils auf jeden Betriebszustand selektiv bezogen verbessert werden. Hierbei kann jedem Betriebszustand eine oder mehrere Komponenten zugeordnet werden.

Ein oder mehrere Drehschwingungsdämpfer können als geteiltes Schwungrad mit einer zwischen einer primären, der Kurbelwelle zugeordneten und einer sekundären, einer Getriebeeingangswelle eines Getriebes zugeordneten Schwungmasse in Umfangsrichtung wirksam angeordneten Federeinrichtung mit zumindest einer Dämpferstufe, als Torsionsschwingungsdämpfer in einer Kupplungsscheibe mit zumindest einer Dämpferstufe, einer im Antriebsstrang zwischen der Brennkraftmaschine und einem Getriebe angeordneten Reibungskupplung oder dergleichen ausgebildet sein. Sofern mehrere Dämpferstufen in einem Drehschwingungsdämpfer vorgesehen sind, kann eine Dämpferstufe dem einen und die andere Dämpferstufe dem anderen Betriebszustand zugeordnet sein und zur Verbesserung deren Drehschwingungsverhaltens abgestimmt sein. Hierzu werden die Steifigkeiten der Dämpferstufen in Umfangsrichtung und Drehwinkel zwischen Ein- und Ausgangsteilen des Drehschwingungsdämpfers entsprechend abgestimmt. Hierbei sind höhere Steifigkeiten zur Dämpfung und Übertragung höherer Drehmomente bei vergleichsweise kleinen Drehwinkeln und geringere Steifigkeiten zur Schwingungskompensation kleinerer Drehmomente bei größeren Drehwinkeln besonders vorteilhaft. Die Dämpferstufen geringerer Steifigkeit werden hierbei bei größeren Drehmomenten bevorzugt überbrückt, so dass diese geschont werden. Die Federeinrichtung kann aus Bogenfedern und/oder Schraubenfedern gebildet sein, wobei bevorzugt in einer Dämpferstufe eines geteilten Schwungrads Bogenfedern und ansonsten bevorzugt Schraubendruckfedern vorgesehen sind.

Ein oder mehrere Fliehkraftpendel können dabei an verschiedenen Orten des Antriebsstrangs angeordnet werden. Auch kann vorteilhaft sein, wenn ein einziges Fliehkraftpendel auf zwei verschiedene Schwingungsordnungen abgestimmt ist indem beispielsweise Pendelmassen mit unterschiedlichen Schwingverhalten vorgesehen werden, indem diese eine an jeweils eine Schwingungsordnung angepasste Massen und/oder Schwingwinkel aufweisen. Jeweils ein Fliehkraftpendel kann an der primären oder sekundären Schwungmasse eines Drehschwingungsdämpfers und/oder an einem Drehschwingungsdämpfer in einer Kupplungsscheibe oder an einer im Antriebsstrang zwischen Kurbelwelle und Getriebeeingangswelle angeordneten Reibungskupplung angeordnet sein.

Die Erfindung wird anhand der in den Figuren 1 bis 14 dargestellten Ausführungsbeispiele näher erläutert. Dabei zeigen:
- Figur 1: einen schematisch und teilweise dargestellten Antriebsstrang mit einem Drehschwingungsdämpfungssystem mit zwei Drehschwingungsdämpfern und einem sekundärseitig angeordneten Fliehkraftpendel,
- Figur 2: eine Momentenkennlinie des Antriebsstrangs der Figur 1,
- Figur 3: einen schematisch und teilweise dargestellten Antriebsstrang mit einem Drehschwingungsdämpfungssystem mit zwei Drehschwingungsdämpfern und einem primärseitig angeordneten Fliehkraftpendel,
- Figur 4: eine Momentenkennlinie des Antriebsstrangs der Figur 3,
- Figur 5: einen schematisch und teilweise dargestellten, dem Antriebsstrang der Figur 1 ähnlichen Antriebsstrang mit einem Drehschwingungsdämpfungssystem mit zwei Drehschwingungsdämpfern mit geänderter Kennlinie und einem sekundärseitig angeordneten Fliehkraftpendel,
- Figur 6: eine Momentenkennlinie des Antriebsstrangs der Figur 5,
- Figur 7: einen schematisch und teilweise dargestellten, dem Antriebsstrang der Figur 1 ähnlichen Antriebsstrang mit einem Drehschwingungsdämpfungssystem mit zwei Drehschwingungsdämpfern mit geänderter Kennlinie und einem primärseitig angeordneten Fliehkraftpendel,
- Figur 8: eine Momentenkennlinie des Antriebsstrangs der Figur 7,
- Figur 9: einen schematisch und teilweise dargestellten Antriebsstrang mit einem Drehschwingungsdämpfungssystem mit zwei Drehschwingungsdämpfern und einem auf einen Torsionsschwingungsdämpfer einer Kupplungsscheibe angeordneten Fliehkraftpendel,
- Figur 10: eine Momentenkennlinie des Antriebsstrangs der Figur 9,
- Figur 11: einen schematisch und teilweise dargestellten Antriebsstrang mit einem Drehschwingungsdämpfungssystem mit zwei Drehschwingungsdämpfern und jeweils auf einem Drehschwingungsdämpfer angeordneten Fliehkraftpendel,
- Figur 12: eine Momentenkennlinie des Antriebsstrangs der Figur 11,
- Figur 13: einen schematisch und teilweise dargestellten dem Antriebsstrang der Figur 11 ähnlichen Antriebsstrang mit einem Drehschwingungsdämpfungssystem mit zwei Drehschwingungsdämpfern und jeweils auf einem Drehschwingungsdämpfer angeordneten Fliehkraftpendel
- und Figur 14: eine Momentenkennlinie des Antriebsstrangs der Figur 13.

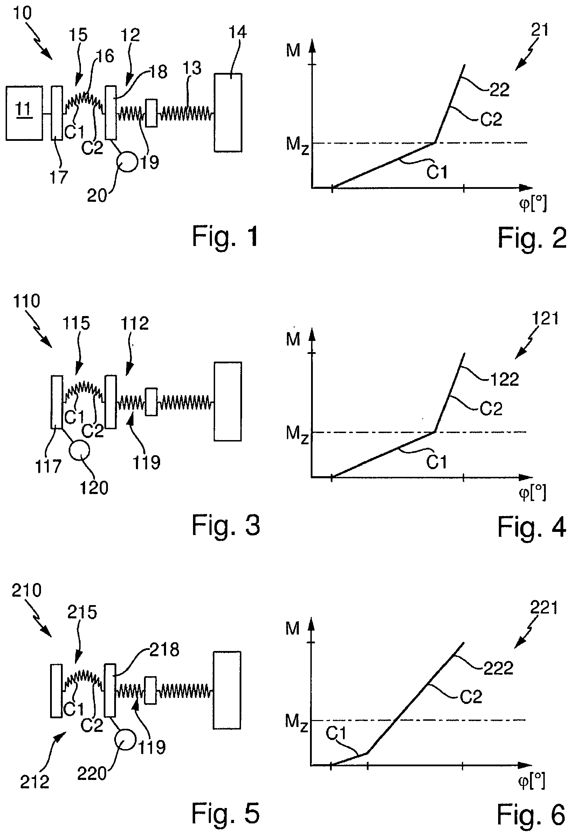

Figur 1 zeigt schematisch den Antriebsstrang 10 mit der in zwei Betriebszuständen wahlweise mit vier oder zwei Zylindern betreibbbaren Brennkraftmaschine 11 und dem Drehschwingungsdämpfungssystem 12 sowie dem drehelastisch mittels der Drehelastizität 13 angekoppelten, Getriebe und Fahrzeugkarosserie nur andeutenden Einheit 14. Das Drehschwingungsdämpfungssystem 12 ist aus dem als geteiltes Schwungrad 16 mit der primären Schwungmasse 17 und der sekundären Schwungmasse 18 gebildeten ersten Drehschwingungsdämpfer 15, dem nachgeschalteten, in einer Kupplungsscheibe einer Reibungskupplung integrierten zweiten Drehschwingungsdämpfer 19 und dem primärseitig angeordneten Fliehkraftpendel 20 gebildet. Hierbei ist dem ersten, zweistufigen Drehschwingungsdämpfer 15 eine Federeinrichtung mit den Federkonstanten c1, c2 zugeordnet. Zur Verbesserung des Drehschwingungsverhaltens des ersten Betriebszustands der Brennkraftmaschine 11 bei Betrieb mit allen, das heißt in diesem Ausführungsbeispiel vier Zylindern, ist das Fliehkraftpendel 20 auf die Schwingungsordnung eins abgestimmt. Weiterhin ist die zweite Dämpferstufe mit den Federkonstanten c2 höherer Steifigkeit auf den Betrieb im ersten Betriebszustand abgestimmt.

In dem zweiten Betriebszustand liegt aufgrund der Zylinderabschaltung ein geringeres Moment an dem Drehschwingungsdämpfungssystem 12 an, so dass eine Verbesserung des Drehschwingungsverhaltens mittels der ersten, weicheren Dämpferstufe mit den Federkonstanten c1 erzielt wird. Der zweite Drehschwingungsdämpfer 19 kann wahlweise oder übergreifend einem Betriebszustand zugeordnet sein.

Figur 2 zeigt das Diagramm 21, in dem in der Momentenkennlinie 22 das Moment des ersten Drehschwingungsdämpfers 15 der Figur 1 gegen den Drehwinkel ϕ der Schwungmassen 17, 18 aufgetragen ist. Da in dem zweiten Betriebszustand der Brennkraftmaschine 11 deren maximales Abschaltmoment M_{Z} mit abgeschalteten Zylindern entsprechend verringert ist, kann mittels der Dämpferstufe mit der Federkonstante c1 eine ausreichende Dämpfungswirkung erzielt werden, während bei zugeschalteten Zylindern im ersten Betriebszustand bei über dem Abschaltmoment M_{Z} liegenden Momenten die zweite Dämpferstufe mit der Federkonstante c2 und das Fliehkraftpendel 20, dessen Wirkung hier nicht einsehbar ist als drehzahladaptiver Tilger wirksam sind.

Figur 3 zeigt im Unterschied zu dem Antriebsstrang 10 der Figur 1 den Antriebsstrang 110, bei dem das Drehschwingungsdämpfungssystem 112 mit dem ersten Drehschwingungsdämpfer 115 und dem zweiten Drehschwingungsdämpfer 119 das primärseitig auf der Schwungmasse 117 angeordnete Fliehkraftpendel 120 aufweist. Das Fliehkraftpendel 120 ist dabei auf die Schwingungsordnung der Brennkraftmaschine bei Betrieb aller Zylinder, also auf den ersten Betriebszustand abgestimmt, im Falle eines Vierzylindermotors nach dem 4-Takt-Prinzip auf die Schwingungsordnung zwei. Da die primärseitige Schwungmasse 117 durch das Fliehkraftpendel 120 erhöht wird, profitiert durch effektivere Tilgung auch der zweite Betriebszustand, obwohl das Fliehkraftpendel 120 nicht auf dessen Schwingungsordnung abgestimmt ist.

Figur 4 zeigt das aus dem Drehschwingungsdämpfer 115 der Figur 3 resultierende Diagramm 121 mit der Momentenkennlinie 122 mit den den beiden Dämpferstufen entsprechend Diagramm 21 der Figur 2 zuordenbaren Federkonstanten c1, c2.

Figur 5 zeigt den dem Antriebsstrang 10 der Figur 1 ähnlichen Antriebsstrang 210 mit dem Drehschwingungsdämpfungssystem 212 mit den beiden Drehschwingungsdämpfern 215, 219 und dem sekundärseitig auf der sekundären Schwungmasse 218 angeordneten Fliehkraftpendel 220. Wie aus dem Diagramm 221 mit der Momentenkennlinie 222 der Figur 6 hervorgeht, ist im Unterschied zu der zweiten Dämpferstufe des ersten Drehschwingungsdämpfers 15 mit der Federkonstante c2 die zweite Dämpferstufe des ersten Drehschwingungsdämpfers 215 mit der Federkonstante c2 über einen breiten Momentenbereich in beiden Betriebszuständen der Brennkraftmaschine wirksam. Die erste Dämpferstufe kann Leerlaufschwingungen dämpfen oder kann zur Vereinfachung des ersten Drehschwingungsdämpfers 215 weggelassen werden.

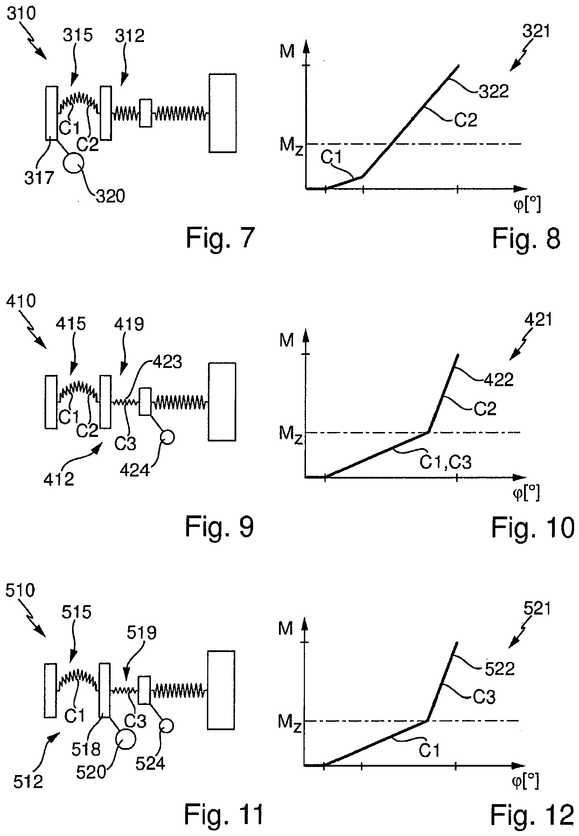

Entsprechend zeigt die Figur 7 den den Antriebssträngen 110, 210 der Figuren 3 und 5 ähnlichen Antriebsstrang 310 mit dem entsprechenden Drehschwingungsdämpfungssystem 312, wobei das Fliehkraftpendel 320 an der primären Schwungmasse 317 des ersten Drehschwingungsdämpfers 315 angeordnet ist. Wie aus dem Diagramm 321 mit der Momentenkennlinie 322 der Figur 8 hervorgeht, ist die Ausbildung der Dämpferstufen mit den Federkonstanten c1, c2 des ersten Drehschwingungsdämpfers 315 ähnlich dem Drehschwingungsdämpfer 215 der Figur 5.

Die Figur 9 zeigt den Antriebsstrang 410 mit dem Drehschwingungsdämpfungssystem 412 mit den beiden Drehschwingungsdämpfern 415, 419 und dem Fliehkraftpendel 424, das im Unterschied zu den zuvor dargestellten Antriebssträngen auf dem zweiten Drehschwingungsdämpfer 419, beispielsweise einem Torsionsschwingungsdämpfer einer Kupplungsscheibe angeordnet ist. Das Drehschwingungsdämpfungssystem verbessert die Drehschwingungen des Antriebsstrangs 410, indem auf das Drehschwingungsverhalten des ersten Betriebszustands das auf dem zweiten Drehschwingungsdämpfer 419 angeordnete Fliehkraftpendel 424, also auf die Schwingungsordnung zwei eines Vierzylindermotors nach dem 4-Takt-Prinzip und eine zweite Dämpferstufe hoher Steifigkeit mit der Federkonstante c2 und auf das Drehschwingungsverhalten des zweiten Betriebszustands eine erste Dämpferstufe geringer Steifigkeit mit der Federkonstante c1 des ersten Drehschwingungsdämpfers 415 und zusätzlich oder alternativ eine Federeinrichtung 423 des zweiten Drehschwingungsdämpfers 419 abgestimmt sind.

Figur 10 zeigt das Diagramm 421 mit der Momentenkennlinie 422 des Drehschwingungsdämpfungssystems 412 der Figur 9. Bis zu dem maximalen Abschaltmoment M_{Z} im zweiten Betriebszustand mit teilweise abgeschalteten Zylindern der der Brennkraftmaschine 11 der Figur 1 entsprechenden Brennkraftmaschine ist die erste Dämpferstufe des ersten Drehschwingungsdämpfers 415 mit der Federkonstante c1 und zusätzlich oder alternativ bei einem einstufigen Drehschwingungsdämpfer 415 die Federeinrichtung 423 mit der Federkonstante c3 des zweiten Drehschwingungsdämpfers 419 vorgesehen. Bei Momenten über dem Abschaltmoment M_{Z} bei Betrieb aller Zylinder im ersten Betriebszustand der Brennkraftmaschine ist die zweite Dämpferstufe mit der Federkonstante c2 zur Dämpfung der Drehschwingungen vorgesehen.

Die Figur 11 zeigt den dem Antriebsstrang 410 ähnlichen Antriebsstrang 510 mit dem Drehschwingungsdämpfungssystem 512. Im Unterschied zu diesem ist auf jedem der Drehschwingungsdämpfer 515, 519 ein Fliehkraftpendel 520, 524 angeordnet. Dabei sind auf das Drehschwingungsverhalten des ersten Betriebszustands, beispielsweise mit Drehschwingungen der Schwingungsordnung zwei, das auf der sekundären Schwungmasse 518 des ersten Drehschwingungsdämpfers 515 angeordnete Fliehkraftpendel 520 und auf das Drehschwingungsverhalten des zweiten Betriebszustands, beispielsweise mit Drehschwingungen der Schwingungsordnung eins, das auf dem zweiten Drehschwingungsdämpfer 519 angeordnete Fliehkraftpendel abgestimmt. Alternativ kann auf das Drehschwingungsverhalten des zweiten Betriebszustands das auf der sekundären Schwungmasse 518 des ersten Drehschwingungsdämpfers 515 angeordnete Fliehkraftpendel 520 und auf das Drehschwingungsverhalten des ersten Betriebszustands das auf dem zweiten Drehschwingungsdämpfer 519 angeordnete Fliehkraftpendel 524 abgestimmt sein. Wie aus dem Diagramm 521 der Figur 12 mit der Momentenkennlinie 522 hervorgeht, ist eine erste Federeinrichtung mit geringer Steifigkeit bis zum maximalen Abschaltmoment M_{Z} und eine zweite Federeinrichtung mit hoher Steifigkeit für größere Momente der Brennkraftmaschine vorgesehen. Hierzu können beide Drehschwingungsdämpfer 515, 519 einstufig vorgesehen und jeweils ein Drehschwingungsdämpfer 515, 519 einem Betriebszustand und damit einem Fliehkraftpendel 520, 524 zugeordnet sein. Bevorzugt ist der Drehschwingungsdämpfer 515 mit einer Federeinrichtung geringer Steifigkeit, beispielsweise in Form von Bogenfedern mit der Federkonstante c1 versehen, während der in einer Kupplungsscheibe vorgesehene Drehschwingungsdämpfer 519 eine Federeinrichtung mit höherer Steifigkeit mit der Federkonstante c3 aufweist. In Abweichung zu dem Drehschwingungsdämpfungssystem 512 der Figuren 11 und 12 kann eine Kupplungsscheibe ohne Drehschwingungsdämpfer und lediglich mit einem Fliehkraftpendel 524 ausgebildet sein, während der Drehschwingungsdämpfer 515 mit Dämpferstufen unterschiedlicher Steifigkeit entsprechend der Federkonstanten c1, c3 des Diagramms 521 ausgebildet ist.

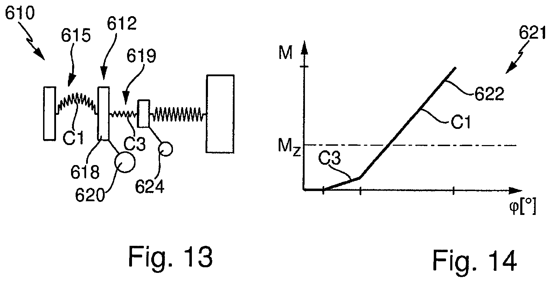

Figur 13 zeigt den dem Antriebsstrang 510 der Figur 11 ähnlichen Antriebsstrang 610 mit dem Drehschwingungsdämpfungssystem 612. Hierbei sind die beiden Fliehkraftpendel 620, 624 auf jeweils einen Schwingungsgrad eines Betriebszustands abgestimmt. Beispielsweise ist auf das Drehschwingungsverhalten des ersten Betriebszustands das auf dem zweiten Drehschwingungsdämpfer 619 angeordnete Fliehkraftpendel 624 und auf das Drehschwingungsverhalten des zweiten Betriebszustands ein auf einer sekundären Schwungmasse 618 des ersten Drehschwingungsdämpfers 615 angeordnetes Fliehkraftpendel 620 abgestimmt. Die Dämpferstufen der Drehschwingungsdämpfer 615, 619 sind - wie aus dem Diagramm 621 mit der Momentenkennlinie 622 der Figur 14 hervorgeht - so ausgelegt, dass eine Federeinrichtung hoher Steifigkeit bereits unterhalb des maximalen Abschaltmoments M_{Z} wirksam ist und lediglich eine Vordämpferstufe mit geringer Steifigkeit wirksam ist. In dem gezeigten Ausführungsbeispiel ist die Dämpferstufe mit der Federkonstante c1 dem ersten Drehschwingungsdämpfer 615 zugeordnet, während die weiche Dämpferstufe mit der Federkonstante c3 dem Drehschwingungsdämpfer 619 zugeordnet ist. In weiteren Ausführungsbeispielen kann die Zuordnung der Dämpferstufen zu den Drehschwingungsdämpfern 615, 619 umgekehrt sein oder es kann lediglich ein zweistufiger Drehschwingungsdämpfer 615 mit Dämpferstufen mit den Federkonstanten c1, c3 vorgesehen sein, wobei das entsprechende Fliehkraftpendel 620 an der Kupplungsscheibe ohne Torsionsschwingungsdämpfer angebracht ist.

### Bezugszeichenliste

- 10: Antriebsstrang
- 11: Brennkraftmaschine
- 12: Drehschwingungsdämpfungssystem
- 13: Elastizität
- 14: Einheit
- 15: Drehschwingungsdämpfer
- 16: geteiltes Schwungrad
- 17: Schwungmasse
- 18: Schwungmasse
- 19: Drehschwingungsdämpfer
- 20: Fliehkraftpendel
- 21: Diagramm
- 22: Momentenkennlinie
- 110: Antriebsstrang
- 112: Drehschwingungsdämpfungssystem
- 115: Drehschwingungsdämpfer
- 117: Schwungmasse
- 119: Drehschwingungsdämpfer
- 120: Fliehkraftpendel
- 121: Diagramm
- 122: Momentenkennlinie
- 210: Antriebsstrang
- 212: Drehschwingungsdämpfungssystem
- 215: Drehschwingungsdämpfer
- 218: Schwungmasse
- 219: Drehschwingungsdämpfer
- 220: Fliehkraftpendel
- 221: Diagramm
- 222: Momentenkennlinie
- 310: Antriebsstrang
- 312: Drehschwingungsdämpfungssystem
- 315: Drehschwingungsdämpfer
- 317: Schwungmasse
- 319: Drehschwingungsdämpfer
- 320: Fliehkraftpendel
- 321: Diagramm
- 322: Momentenkennlinie
- 410: Antriebsstrang
- 412: Drehschwingungsdämpfungssystem
- 415: Drehschwingungsdämpfer
- 417: Schwungmasse
- 419: Drehschwingungsdämpfer
- 421: Diagramm
- 422: Momentenkennlinie
- 423: Federeinrichtung
- 424: Fliehkraftpendel
- 510: Antriebsstrang
- 512: Drehschwingungsdämpfungssystem
- 515: Drehschwingungsdämpfer
- 518: Schwungmasse
- 519: Drehschwingungsdämpfer
- 520: Fliehkraftpendel
- 521: Diagramm
- 522: Momentenkennlinie
- 524: Fliehkraftpendel
- 610: Antriebsstrang
- 612: Drehschwingungsdämpfungssystem
- 615: Drehschwingungsdämpfer
- 618: Schwungmasse
- 619: Drehschwingungsdämpfer
- 620: Fliehkraftpendel
- 621: Diagramm
- 622: Momentenkennlinie
- 624: Fliehkraftpendel
- c1: Federkonstante
- c2: Federkonstante
- c3: Federkonstante
- M: Moment
- M_{Z}: Abschaltmoment
- ϕ: Drehwinkel

## Patentansprüche

1. Antriebsstrang (10, 110, 210, 310, 410, 510, 610) mit einer Brennkraftmaschine (11) mit einer vorgegebenen Anzahl von Zylindern mit einem ersten Betriebszustand, in dem alle Zylinder betrieben werden, und einem zweiten Betriebszustand, in dem ein Teil der Zylinder abgeschaltet ist, und mit einem Drehschwingungsdämpfungssystem (12, 112, 212, 312, 412, 512, 612) mit zumindest einem Drehschwingungsdämpfer (15, 115, 215, 315, 415, 515, 615, 19, 119, 219, 319, 419, 519, 619) und zumindest einem Fliehkraftpendel (20, 120, 220, 320, 520, 620, 424, 524, 624), **dadurch gekennzeichnet, dass** ein Fliehkraftpendel (20, 120, 220, 320, 520, 620, 424, 524, 624) und wahlweise ein Drehschwingungsdämpfer (15, 115, 215, 315, 415, 515, 615, 19, 119, 219, 319, 419, 519, 619) auf ein Drehschwingungsverhalten eines der zwei Betriebszustände und ein Drehschwingungsdämpfer (15, 115, 215, 315, 415, 515, 615, 19, 119, 219, 319, 419, 519, 619) und wahlweise ein zweites Fliehkraftpendel (20, 120, 220, 320, 520, 620, 424, 524, 624) auf das Drehschwingungsverhalten des anderen der zwei Betriebszustände abgestimmt sind.

2. Antriebsstrang (10, 110, 210, 310, 410, 510, 610) nach Anspruch 1, **dadurch gekennzeichnet, dass** ein erster Drehschwingungsdämpfer (15, 115, 215, 315, 415, 515, 615) ein geteiltes Schwungrad (16) mit zumindest einer Dämpferstufe und ein zweiter Drehschwingungsdämpfer (19, 119, 219, 319, 419, 519, 619) ein Torsionsschwingungsdämpfer in einer Kupplungsscheibe mit zumindest einer Dämpferstufe einer im Antriebsstrang zwischen der Brennkraftmaschine (11) und einem Getriebe angeordneten Reibungskupplung ist.

3. Antriebsstrang (10, 110, 210, 310, 510, 610) nach Anspruch 2, **dadurch gekennzeichnet, dass** ein Fliehkraftpendel (20, 120, 220, 320, 520, 620) auf einer primären oder sekundären Schwungmasse (18, 117, 218, 317, 518, 618) des ersten Drehschwingungsdämpfers (15, 115, 215, 315, 515, 615) angeordnet ist.

4. Antriebsstrang (410, 510, 610) nach Anspruch 2 oder 3, **dadurch gekennzeichnet, dass** ein Fliehkraftpendel (424, 524, 624) auf dem zweiten Drehschwingungsdämpfer (419, 519, 619) angeordnet ist.

5. Antriebsstrang (10, 110) nach Anspruch 3, **dadurch gekennzeichnet, dass** auf das Drehschwingungsverhalten des ersten Betriebszustands ein auf einer primären oder sekundären Schwungmasse (18, 117) des ersten Drehschwingungsdämpfers (15, 115) angeordnetes Fliehkraftpendel (20, 120) und der erste Drehschwingungsdämpfer (15, 115) und auf das Drehschwingungsverhalten des zweiten Betriebszustands der erste Drehschwingungsdämpfer (15, 115) abgestimmt sind.

6. Antriebsstrang (210, 310) nach Anspruch 3, **dadurch gekennzeichnet, dass** auf das Drehschwingungsverhalten des ersten Betriebszustands der erste Drehschwingungsdämpfer (215, 315) und auf das Drehschwingungsverhalten des zweiten Betriebszustands ein auf einer primären oder sekundären Schwungmasse (218, 317) des ersten Drehschwingungsdämpfers (215, 315) angeordnetes Fliehkraftpendel (220, 320) und der erste Drehschwingungsdämpfer abgestimmt sind.

7. Antriebsstrang (410) nach Anspruch 4, **dadurch gekennzeichnet, dass** auf das Drehschwingungsverhalten des ersten Betriebszustands ein auf dem zweiten Drehschwingungsdämpfer (419) angeordnetes Fliehkraftpendel (424) und eine erste Dämpferstufe hoher Steifigkeit und auf das Drehschwingungsverhalten des zweiten Betriebszustands eine zweite Dämpferstufe geringer Steifigkeit des ersten Drehschwingungsdämpfers (415) abgestimmt sind.

8. Antriebsstrang (510, 610) nach Anspruch 4, **dadurch gekennzeichnet, dass** auf das Drehschwingungsverhalten des ersten Betriebszustands ein auf der sekundären Schwungmasse (518, 618) des ersten Drehschwingungsdämpfers (515, 615) angeordnetes Fliehkraftpendel (520, 620) und auf das Drehschwingungsverhalten des zweiten Betriebszustands ein auf dem zweiten Drehschwingungsdämpfer (519, 619) angeordnetes Fliehkraftpendel (524, 624) abgestimmt sind.

9. Antriebsstrang (610) nach Anspruch 8, **dadurch gekennzeichnet, dass** auf das Drehschwingungsverhalten des zweiten Betriebszustands zusätzlich eine Dämpferstufe hoher Steifigkeit des ersten Drehschwingungsdämpfer (615) abgestimmt ist.

10. Antriebsstrang (510) nach Anspruch 8, **dadurch gekennzeichnet, dass** auf das Drehschwingungsverhalten des zweiten Betriebszustands zusätzlich eine Dämpferstufe geringer Steifigkeit des ersten Drehschwingungsdämpfer (515) abgestimmt ist.

11. Antriebsstrang (510, 610) nach Anspruch 4, **dadurch gekennzeichnet, dass** auf das Drehschwingungsverhalten des ersten Betriebszustands ein auf dem zweiten Drehschwingungsdämpfer (519, 619) angeordnetes Fliehkraftpendel (524, 624) und auf das Drehschwingungsverhalten des zweiten Betriebszustands ein auf einer sekundären Schwungmasse (518, 618) des ersten Drehschwingungsdämpfers (515, 615) angeordnetes Fliehkraftpendel (520, 620) abgestimmt sind.

## Claims

1. Drivetrain (10, 110, 210, 310, 410, 510, 610) having an internal combustion engine (11) with a predefined number of cylinders with a first operating state, in which all of the cylinders are operated, and a second operating state, in which some of the cylinders are deactivated, and having a rotary vibration damping system (12, 112, 212, 312, 412, 512, 612) with at least one rotary vibration damper (15, 115, 215, 315, 415, 515, 615, 19, 119, 219, 319, 419, 519, 619) and with at least one centrifugal pendulum (20, 120, 220, 320, 520, 620, 424, 524, 624), **characterized in that** one centrifugal pendulum (20, 120, 220, 320, 520, 620, 424, 524, 624) and optionally one rotary vibration damper (15, 115, 215, 315, 415, 515, 615, 19, 119, 219, 319, 419, 519, 619) are adapted to a rotary vibration characteristic of one of the two operating states, and one rotary vibration damper (15, 115, 215, 315, 415, 515, 615, 19, 119, 219, 319, 419, 519, 619) and optionally a second centrifugal pendulum (20, 120, 220, 320, 520, 620, 424, 524, 624) are adapted to the rotary vibration characteristics of the other of the two operating states.

2. Drivetrain (10, 110, 210, 310, 410, 510, 610) according to Claim 1, **characterized in that** a first rotary vibration damper (15, 115, 215, 315, 415, 515, 615) is a split flywheel (16) with at least one damper stage, and a second rotary vibration damper (19, 119, 219, 319, 419, 519, 619) is a torsional vibration damper in a clutch disk, with at least one damper stage, of a friction clutch arranged in the drivetrain between the internal combustion engine (11) and a gearbox.

3. Drivetrain (10, 110, 210, 310, 510, 610) according to Claim 2, **characterized in that** one centrifugal pendulum (20, 120, 220, 320, 520, 620) is arranged on a primary or secondary centrifugal mass (18, 117, 218, 317, 518, 618) of the first rotary vibration damper (15, 115, 215, 315, 515, 615).

4. Drivetrain (410, 510, 610) according to Claim 2 or 3, **characterized in that** one centrifugal pendulum (424, 524, 624) is arranged on the second rotary vibration damper (419, 519, 619).

5. Drivetrain (10, 110) according to Claim 3, **characterized in that** a centrifugal pendulum (20, 120) arranged on a primary or secondary centrifugal mass (18, 117) of the first rotary vibration damper (15, 115), and the first rotary vibration damper (15, 115), are adapted to the rotary vibration characteristics of the first operating state, and the first rotary vibration damper (15, 115) is adapted to the rotary vibration characteristics of the second operating state.

6. Drivetrain (210, 310) according to Claim 3, **characterized in that** the first rotary vibration damper (215, 315) is adapted to the rotary vibration characteristics of the first operating state, and a centrifugal pendulum (220, 320) arranged on a primary or secondary centrifugal mass (218, 317) of the first rotary vibration damper (215, 315), and the first rotary vibration damper, are adapted to the rotary vibration characteristics of the second operating state.

7. Drivetrain (410) according to Claim 4, **characterized in that** a centrifugal pendulum (424) arranged on the second rotary vibration damper (419), and a first damper stage of high stiffness, are adapted to the rotary vibration characteristics of the first operating state, and a second damper stage of low stiffness of the first rotary vibration damper (415) is adapted to the rotary vibration characteristics of the second operating state.

8. Drivetrain (510, 610) according to Claim 4, **characterized in that** a centrifugal pendulum (520, 620) arranged on the secondary centrifugal mass (518, 618) of the first rotary vibration damper (515, 615) is adapted to the rotary vibration characteristics of the first operating state, and a centrifugal pendulum (524, 624) arranged on the second rotary vibration damper (519, 619) is adapted to the rotary vibration characteristics of the second operating state.

9. Drivetrain (610) according to Claim 8, **characterized in that** a damper stage of high stiffness of the first rotary vibration damper (615) is additionally adapted to the rotary vibration characteristics of the second operating state.

10. Drivetrain (510) according to Claim 8, **characterized in that** a damper stage of low stiffness of the first rotary vibration damper (515) is additionally adapted to the rotary vibration characteristics of the second operating state.

11. Drivetrain (510, 610) according to Claim 4, **characterized in that** a centrifugal pendulum (524, 624) arranged on the second rotary vibration damper (519, 619) is adapted to the rotary vibration characteristics of the first operating state, and a centrifugal pendulum (520, 620) arranged on a secondary centrifugal mass (518, 618) of the first rotary vibration damper (515, 615) is adapted to the rotary vibration characteristics of the second operating state.

## Revendications

1. Chaîne cinématique (10, 110, 210, 310, 410, 510, 610) comprenant un moteur à combustion interne (11) avec un nombre prédéfini de cylindres avec un premier état de fonctionnement dans lequel tous les cylindres fonctionnent et un deuxième état de fonctionnement dans lequel une partie des cylindres est déconnectée et comprenant un système d'amortissement des oscillations de torsion (12, 112, 212, 312, 412, 512, 612) avec au moins un amortisseur des oscillations de torsion (15, 115, 215, 315, 415, 515, 615, 19, 119, 219, 319, 419, 519, 619) et au moins un pendule centrifuge (20, 120, 220, 320, 520, 620, 424, 524, 624), **caractérisée en ce qu'**un pendule centrifuge (20, 120, 220, 320, 520, 620, 424, 524, 624) et, de manière sélective, un amortisseur des oscillations de torsion (15, 115, 215, 315, 415, 515, 615, 19, 119, 219, 319, 419, 519, 619), sont ajustés à un comportement d'oscillations de torsion de l'un des deux états de fonctionnement, et un amortisseur des oscillations de torsion (15, 115, 215, 315, 415, 515, 615, 19, 119, 219, 319, 419, 519, 619) et, de manière sélective, un deuxième pendule centrifuge (20, 120, 220, 320, 520, 620, 424, 524, 624), sont ajustés à un comportement d'oscillations de torsion de l'autre des deux états de fonctionnement.

2. Chaîne cinématique (10, 110, 210, 310, 410, 510, 610) selon la revendication 1, **caractérisée en ce qu'**un premier amortisseur des oscillations de torsion (15, 115, 215, 315, 415, 515, 615) est un volant d'inertie divisé (16) avec au moins un étage amortisseur et un deuxième amortisseur des oscillations de torsion (19, 119, 219, 319, 419, 519, 619) est un amortisseur des oscillations de torsion dans un disque d'embrayage avec au moins un étage amortisseur d'un embrayage à friction disposé dans la chaîne cinématique entre le moteur à combustion interne (11) et une boîte de vitesses.

3. Chaîne cinématique (10, 110, 210, 310, 510, 610) selon la revendication 2, **caractérisée en ce qu'**un pendule centrifuge (20, 120, 220, 320, 520, 620) est disposé sur une masse d'inertie primaire ou secondaire (18, 117, 218, 317, 518, 618) du premier amortisseur des oscillations de torsion (15, 115, 215, 315, 515, 615).

4. Chaîne cinématique (410, 510, 610) selon la revendication 2 ou 3, **caractérisée en ce qu'**un pendule centrifuge (424, 524, 624) est disposé sur un deuxième amortisseur des oscillations de torsion (419, 519, 619).

5. Chaîne cinématique (10, 110) selon la revendication 3, **caractérisée en ce qu'**un pendule centrifuge (20, 120) disposé sur une masse d'inertie primaire ou secondaire (18, 117) du premier amortisseur des oscillations de torsion (15, 115) et le premier amortisseur des oscillations de torsion (15, 115) sont ajustés au comportement d'oscillation de torsion du premier état de fonctionnement et le premier amortisseur des oscillations de torsion (15, 115) est ajusté au comportement d'oscillation de torsion du deuxième état de fonctionnement.

6. Chaîne cinématique (210, 310) selon la revendication 3, **caractérisée en ce que** le premier amortisseur des oscillations de torsion (215, 315) est ajusté au comportement d'oscillation de torsion du premier état de fonctionnement et un pendule centrifuge (220, 320) disposé sur une masse d'inertie primaire ou secondaire (218, 317) du premier amortisseur des oscillations de torsion (215, 315) et le premier amortisseur des oscillations de torsion sont ajustés au comportement d'oscillation de torsion du deuxième état de fonctionnement.

7. Chaîne cinématique (410) selon la revendication 4, **caractérisée en ce qu'**un pendule centrifuge (424) disposé sur le deuxième amortisseur des oscillations de torsion (419) et un premier étage d'amortisseur de haute rigidité sont ajustés au comportement d'oscillation de torsion du premier état de fonctionnement et un deuxième étage d'amortisseur de plus faible rigidité du premier amortisseur des oscillations de torsion (415) est ajusté au comportement d'oscillation de torsion du deuxième état de fonctionnement.

8. Chaîne cinématique (510, 610) selon la revendication 4, **caractérisé en ce qu'**un pendule centrifuge (520, 620) disposé sur la masse d'inertie secondaire (518, 618) du premier amortisseur des oscillations de torsion (515, 615) est ajusté au comportement d'oscillation de torsion du premier état de fonctionnement et un pendule centrifuge (524, 624) disposé sur le deuxième amortisseur des oscillations de torsion (519, 619) est ajusté au comportement d'oscillation de torsion du deuxième état de fonctionnement.

9. Chaîne cinématique (610) selon la revendication 8, **caractérisée en ce qu'**un étage d'amortisseur de haute rigidité du premier amortisseur des oscillations de torsion (615) est en outre ajusté au comportement d'oscillation de torsion du deuxième état de fonctionnement.

10. Chaîne cinématique (510) selon la revendication 8, **caractérisée en ce qu'**un étage d'amortisseur de plus faible rigidité du premier amortisseur des oscillations de torsion (515) est en outre ajusté au comportement d'oscillation de torsion du deuxième état de fonctionnement.

11. Chaîne cinématique (510, 610) selon la revendication 4, **caractérisée en ce qu'**un pendule centrifuge (524, 624) disposé sur le deuxième amortisseur des oscillations de torsion (519, 619) est ajusté au comportement d'oscillation de torsion du premier état de fonctionnement et un pendule centrifuge (520, 620) disposé sur une masse d'inertie secondaire (518, 618) du premier amortisseur des oscillations de torsion (515, 615) est ajusté au comportement d'oscillation de torsion du deuxième état de fonctionnement.
